# EUROPÄISCHE PATENTSCHRIFT

(11) **EP 2 398 680 B1**
(45) Veröffentlichungstag und Bekanntmachung des Hinweises auf die Patenterteilung: **08.04.2015**
(21) Anmeldenummer: 10704822.5
(22) Anmeldetag: 18.02.2010
(51) Int. Cl.: B60S 1/38

(54) **WISCHERBLATT FÜR EINEN SCHEIBENWISCHER SOWIE VERFAHREN ZU SEINER HERSTELLUNG**
WIPER BLADE FOR A WINDOW WIPER AND METHOD FOR THE PRODUCTION OF SAID WIPER BLADE
BALAI POUR UN ESSUIE-GLACE ET PROCÉDÉ DE FABRICATION ASSOCIÉ

(30) Priorität: 20.02.2009 DE 102009001043
(43) Veröffentlichungstag der Anmeldung: 28.12.2011
(73) Patentinhaber: Robert Bosch GmbH, 70442 Stuttgart (DE)
(72) Erfinder: LAY, Reiner, 52072 Aachen (DE); VANKERKHOVE, Bart, B-3000 Leuven (BE)
(86) Internationale Anmeldenummer: PCT/EP2010/052055
(87) Internationale Veröffentlichungsnummer: WO 2010/094742

(56) Entgegenhaltungen:
- EP-A1- 0 587 195
- EP-A1- 0 665 143
- DE-A1-102006 035 238
- FR-A1- 2 804 392
- US-A- 3 718 940
- US-A- 5 568 670

## Beschreibung

### Stand der Technik

Die Erfindung geht aus von einem Wischerblatt für einen Scheibenwischer, insbesondere einen Scheibenwischer für ein Kraftfahrzeug gemäß dem Oberbegriff des Anspruchs 1. Weiterhin betrifft die Erfindung ein Verfahren zur Herstellung eines solchen Wischerblatts.

Wischblätter für Scheibenwischer werden üblicherweise aus Elastomermaterialien gefertigt. Durch die Verwendung der Elastomermaterialien können sich die Wischblätter einerseits an die Kontur einer Windschutzscheibe eines Kraftfahrzeuges anpassen und andererseits wird eine ausreichende Elastizität bei unterschiedlichen Temperaturanforderungen gewährleistet. Damit der Scheibenwischer in beide Bewegungsrichtungen zu guten Wischergebnissen führt, ist ein Wischgummi üblicherweise aus einem Basisabschnitt und einem Lippenabschnitt gefertigt, wobei der Basisabschnitt und der Lippenabschnitt so miteinander verbunden sind, dass der Lippenabschnitt in Abhängigkeit von der Wischrichtung des Scheibenwischers abknicken kann. Üblicherweise werden Basisabschnitt, Lippenabschnitt und das Gelenk zwischen Basisabschnitt und Lippenabschnitt einteilig aus dem Elastomermaterial zum Beispiel durch ein Extrusionsverfahren gefertigt. Um eine ausreichend stabile Befestigung von Lippenabschnitt und Basisabschnitt sicher zu stellen, ist jedoch eine Mindestdicke des Elastomermaterials im Gelenkbereich erforderlich. Dies kann jedoch zu einer Einschränkung der Kippbewegung führen. Zudem wird das Elastomermaterial im Gelenkbereich durch das regelmäßige Abknicken zusätzlich belastet, was zu einer Schwächung des Materials führen kann.

Um den Basisabschnitt und den Gelenkbereich zu verstärken ist es zum Beispiel aus WO-A 00/20265 bekannt, das Elastomermaterial des Basisabschnitts und des Gelenkabschnitts aus einem faserverstärkten Elastomermaterial zu fertigen. Nur der Lippenabschnitt wird nicht durch Fasern verstärkt, damit die Wischqualität nicht verschlechtert wird. Eine solche Faserverstärkung hat jedoch den Nachteil, dass die Gelenkeigenschaften des Gelenkabschnitts verschlechtert werden, da das Material durch den Faseranteil insgesamt versteift wird.

Um zu vermeiden, dass der Lippenabschnitt eines Wischerblattes dauerhaft verformt wird, ist es aus JP 57077241 bekannt, einen Gewebeabschnitt entlang der Mittelachse des Wischgummis einzulegen. Der Gewebestreifen weist eine höhere Zugfestigkeit auf als das Elastomermaterial und zeigt einen hervorragenden Widerstand gegen Verformungen, so dass auch dann, wenn der Scheibenwischer für lange Zeit nicht betätigt wird, eine bleibende Verformung der Wischlippe vermieden wird. Nachteil ist jedoch, dass die Positionierung des Gewebeabschnitts, wie er in JP 57077241 offenbart ist, äußerst schwierig ist.

Aus der DE 102006035238 A1 ist eine Wischeranordnung bekannt. Die Wischeranordnung umfasst einen Grundkörper und eine Wischerleiste, wobei die Wischerleiste ein Mikrofasergewebe aufweist. Sowohl der Grundkörper als auch das Mikrofasergewebe sind aus gehärteten Polymeren hergestellt.

### Offenbarung der Erfindung

Ein erfindungsgemäß ausgebildetes Wischerblatt für einen Scheibenwischer, insbesondere einen Scheibenwischer für ein Kraftfahrzeug, umfasst ein Wischgummi aus einem Elastomermaterial mit einem Basisabschnitt und einem Lippenabschnitt, wobei das Elastomermaterial eine Gewebeeinlage zumindest teilweise umschließt. Der Basisabschnitt und der Lippenabschnitt sind durch die Gewebeeinlage miteinander verbunden, wobei die Gewebeeinlage als Gelenk dient, und ein Teil der Gewebeeinlage steht aus dem Basisabschnitt aus der dem Lippenabschnitt abgewandten Seite hervor.

Dadurch, dass der Basisabschnitt und der Lippenabschnitt durch die Gewebeeinlage miteinander verbunden sind, wodurch die Gewebeeinlage als Gelenk dient, wird ein verbessertes Abknickverhalten des Lippenabschnitts gegenüber dem Basisabschnitt erzielt, als dies bei einer Verwendung durch Elastomermaterial der Fall ist. Zudem wird vermieden, dass das Gelenk eine potenzielle Schwachstelle ist, da die Gewebeeinlage insbesondere gegenüber Witterungseinflüssen und Rissbildung aufgrund der Witterungseinflüsse stabil ist. Auch kann die Gewebeeinlage in einer geringeren Dicke ausgeführt werden als ein Gelenkabschnitt aus Elastomermaterial, wodurch das Abknickverhalten ebenfalls verbessert wird.

Das Hervorstehen eines Teils der Gewebeeinlage aus dem Basisabschnitt auf der dem Lippabschnitt abgewandten Seite hat den Vorteil, dass der hervorstehende Teil der Gewebeeinlage zum Beispiel als Mittel zur Förderung des Wischerprofils während bzw. nach der Extrusion dienen kann. Üblicherweise wird das Wischgummi durch Extrusion des Elastomermaterials hergestellt. Nach der Extrusion wird das Elastomermaterial zum Wischgummi vulkanisiert. Die für die Vulkanisation erforderliche Wärmebehandlung kann zum Beispiel durchgeführt werden, indem das bei der Extrusion hergestellte Strangprofil am hervorstehenden Teil des Gewebematerials befestigt wird. Auf diese Weise ist das Elastomermaterial von allen Seiten frei zugänglich, da das Strangprofil nirgendwo aufliegt. Eine verbesserte Wärmebehandlung ist auf diese Weise möglich. Auch bei einer Vulkanisation in einem Salzbad ist das Elastomermaterial von allen Seiten zugänglich, wenn das bei der Extrusion hergestellte Strangprofil am hervorstehenden Teil der Gewebeeinlage befestigt und transportiert wird.

Auch für Verfahrensschritte, die vor der Vulkanisation durchgeführt werden oder sich an die Vulkanisation anschließen, kann der aus dem Basisabschnitt hervorstehende Teil der Gewebeeinlage genutzt werden, um das Strangprofil daran an einer Fördereinrichtung zu befestigen.

Um eine ausreichende Elastizität bei unterschiedlichen Temperaturanforderungen zu gewährleisten, wird das Wischgummi aus einem Elastomermaterial gefertigt. Als Elastomermaterialien zur Herstellung des Wischgummis eignen sich zum Beispiel Naturkautschuk (NR), Chloropren-Kautschuk (CR), Butadien-Kautschuk (BR), Styrol-Butadien-Kautschuk (SBR), Ethylen-Propylen-Copolymere (EPM), Ethylen-Propylen-Dien-Terpolymere (EPDM), Ethylen-Vinylacetat-Copolymere (EVM), chloriertes Polyethylen (CM), chlorsulfoniertes Polyethylen (CSM), Acrylnitril-Butadien-Kautschuk (NBR), hydrierter Acrylnitril-Butadien-Kautschuk (HNBR), Fluorkautschuk (FPM), Polyurethan-Elastomer (PUR), Mischungen aus Acrylnitril-Butadien-Kautschuk und Polyvinylchlorid (NBR/PVC), sowie Mischungen aus diesen Materialien.

Besonders bevorzugt ist das Elastomermaterial ausgewählt aus der Gruppe bestehend aus Ethylen-Propylen-Dien-Terpolymere, Naturkautschuk, Chloropren-Kautschuk oder einer Mischung daraus.

Ein geegneites Verfahren zur Herstellung eines Wischerblatts umfasst folgende Schritte:
(a) Führen eines Gewebestreifens durch ein Werkzeug eines Extruders zur Bildung einer Gewebeeinlage,
(b) Umschließen des Gewebestreifens mit einem Elastomermaterial zur Herstellung eines Strangprofils,
(c) Schneiden des Strangprofils in einzelne Wischgummis.

Geeignete Werkzeuge, durch die ein Gewebestreifen zur Bildung einer Gewebeeinlage geführt werden kann und in denen der Gewerbestreifen mit einem Elastomermaterial zur Bildung eines Strangprofils umschlossen wird, sind dem Fachmann bekannt.

Um den Gewebestreifen durch das Werkzeug zu führen, ist es notwendig, eine Abzugsvorrichtung hinter dem Werkzeug vorzusehen. Die Abzugsvorrichtung kann entweder das Strangprofil umschließen oder alternativ, insbesondere in der Ausführungsform, in der ein Teil der Gewebeeinlage aus dem Basisabschnitt auf der dem Lippenabschnitt abgewandten Seite hervorsteht, am aus dem Basisabschnitt hervorstehenden Teil der Gewebeeinlage angreifen. Bevorzugt greift die Abzugsvorrichtung an dem aus dem Basisabschnitt hervorstehenden Teil der Gewebeeinlage an, da auf diese Weise vermieden wird, dass das Strangprofil aus dem Elastomermaterial durch die Abzugsvorrichtung verformt wird.

Nach dem Verlassen des Extruderwerkzeugs ist es notwendig, das Strangprofil zu vulkanisieren. Das Vulkanisieren erfolgt in der Regel vor dem Schneiden des Strangprofils in einzelne Wischgummis. Wie zuvor bereits beschrieben ist es insbesondere vorteilhaft, wenn ein Teil der Gewebeeinlage aus dem Basisabschnitt auf der dem Lippenabschnitt abgewandten Seite hervorsteht, da das Strangprofil dann an diesem hervorstehenden Teil gegriffen werden kann und so das Elastomermaterial von allen Seiten für die Vulkanisation zugänglich ist und nicht mit Teilen aufliegt.

Um den Teil der Gewebeeinlage, der aus dem Basisabschnitt hervorsteht, besser greifen zu können, ist es vorteilhaft, wenn der aus dem Basisabschnitt hervorstehende Teil der Gewebeeinlage eine Verdickung aufweist. Die Verdickung kann zum Beispiel durch ein Aufrollen des Materials der Gewebeeinlage gebildet werden. Auch ist es möglich, zum Beispiel Fäden oder Gewebestreifen auf der Gewebeeinlage zur Herstellung der Verdickung aufzubringen. Alternativ kann die Verdickung jedoch auch aus einem anderen Material gefertigt werden. So ist es zum Beispiel möglich, einen Faden, der aus einer oder mehreren Fasern gefertigt ist, oder beispielsweise auch einen Draht mit dem Material der Gewebeeinlage zu umschließen. Auch ist es möglich, die Verdickung zum Beispiel durch Aufbringen eines Polymermaterials auf die Gewebeeinlage herzustellen. Als Polymermaterial kann dabei jedes beliebige thermoplastische, elastomere oder duroplastische Polymermaterial verwendet werden. Bei der Auswahl des Materials ist jedoch darauf zu achten, dass dieses gegenüber Temperaturen zum Beispiel von nachfolgenden Verarbeitungsschritten stabil ist.

Die Verdickung kann an jeder beliebigen Position des aus dem Basisabschnitt hervorstehenden Teils der Gewebeeinlage ausgebildet sein. Bevorzugt ist es jedoch, dass die Verdickung am Ende des aus dem Basisabschnitt hervorstehenden Teils der Gewebeeinlage ausgebildet ist.

In einer weiteren Ausführungsform bildet der aus dem Basisabschnitt hervorstehende Teil der Gewebeeinlage eine Manschette. In der Manschette kann zum Beispiel ein beliebiges Bauelement, beispielsweise ein Federelement, montiert werden. Als Federelement, das in der Manschette montiert wird, wird zum Beispiel eine Blattfeder eingesetzt wie sie üblicherweise in Wischgummis für Scheibenwischer montiert wird. Durch den Einsatz der Blattfeder wird die notwendige Biegung des Wischgummis erzielt. Zur Herstellung der Manschette kann eine Öse aus dem Material der Gewebeeinlage gefertigt sein. Um eine vorgegebene Form einzustellen, ist es möglich, die Öse aus dem Material der Gewebeeinlage zusätzlich zu verstärken. Hierzu ist es zum Beispiel möglich, die Gewebeeinlage in einem Matrixmaterial, beispielsweise einem duroplastischen Harz zu tränken. Alternativ ist es auch möglich, die Öse zur Bildung der Manschette zum Beispiel durch Umwickeln mit einem weiteren Material, beispielsweise einem metallischen oder einem polymeren Material zu verstärken. Zum Umwickeln kann beispielsweise ein Draht verwendet werden.

Als Material für die Gewebeeinlage kann jedes beliebige Material, das zu Fasern verarbeitet werden kann, eingesetzt werden. Das Material muss jedoch gegenüber den bei der Herstellung des Wischerblattes auftretenden Temperaturen stabil sein.

Geeignete Materialien zur Herstellung der Gewebeeinlage sind zum Beispiel Naturfasern, mineralische Fasern oder Polymerfasern. Insbesondere ist es bevorzugt, wenn die Gewebeeinlage Aramidfasern enthält. Ganz besonders bevorzugt ist es, wenn die Gewebeeinlage aus Aramidfasern besteht. Neben Aramidfasern eignen sich jedoch insbesondere auch Polyamid, beispielsweise PA6, PA66 oder PA12, Polyester wie PET oder PBT, Polyacryl, beispielsweise PAN, oder Cellulose-Acetat zur Herstellung der Gewebeeinlage.

Insbesondere wenn die Gewebeeinlage als Gelenk dient, ist es möglich, den Lippenabschnitt und den Basisabschnitt aus unterschiedlichen Materialien zu fertigen. Auf diese Weise ist es möglich, das gewählte Material für den Lippenabschnitt und für den Basisabschnitt den jeweiligen Anforderungen anzupassen. So kann z.B. für den Basisabschnitt ein härteres Material gewählt werden, um eine stabilere Festigung des Wischerblatts zu ermöglichen und ein weicheres Material für den Lippenabschnitt, um ein besseres Wischergebnis zu erzielen.

Um zu vermeiden, dass das Wischerblatt auf einer zu wischenden Scheibe im Betrieb rattert, ist es weiterhin möglich, den Lippenabschnitt oder zumindest die Wischkante des Lippenabschnitts mit einer Beschichtung zu versehen, die beispielsweise Trockenschmierstoffpartikel enthält. Durch die Auswahl einer geeigneten Beschichtung lässt sich so auch ein schlierenfreies Wischergebnis erzielen und der Verschleiß des Wischgummis minimieren.

### Kurze Beschreibung der Zeichnungen

Ausführungsformen der Erfindungen sind in den Zeichnungen dargestellt und werden in der nachfolgenden Beschreibung näher erläutert.

Es zeigen:
- Figur 1: einen Schnitt durch einen ausgebildeten Wischgummi mit einer Gewebeeinlage, die als Gelenk dient,
- Figur 2: einen Schnitt durch ein erfindungsgemäß ausgebildetes Wischgummi, bei dem ein Teil der Gewebeeinlage aus dem Basisabschnitt hervorsteht,
- Figur 3: einen Schnitt durch einen erfindungsgemäß ausgebildeten Wischgummi mit einer Verdickung an dem aus dem Basisabschnitt hervorstehenden Teil der Gewebeeinlage,
- Figur 4: ein erfindungsgemäß ausgebildetes Wischerblatt mit einer Manschette an dem aus dem Basisabschnitt hervorstehenden Teil der Gewebeeinlage.

### Ausführungsformen der Erfindung

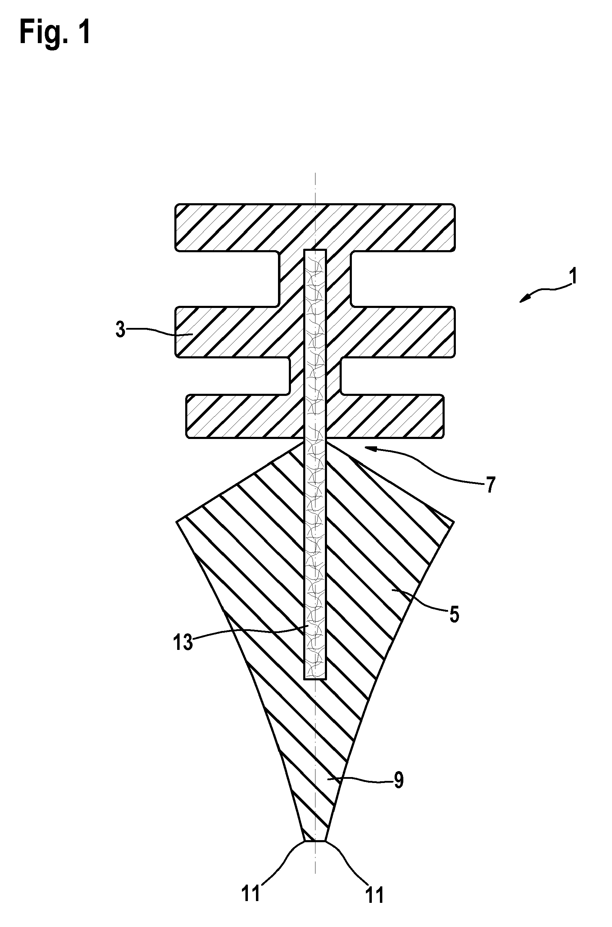

In Figur 1 ist ein Schnitt durch ein Wischerblatt mit einer als Gelenk dienenden Gewebeeinlage dargestellt.

Ein erfindungsgemäß ausgebildetes Wischgummi 1 umfasst einen Basisabschnitt 3 und einen Lippenabschnitt 5. Der Basisabschnitt 3 und der Lippenabschnitt 5 sind über einen Gelenkabschnitt 7 miteinander verbunden.

Bei einem Scheibenwischer für ein Kraftfahrzeug weist der Lippenabschnitt 5 des Wischgummis 1 eine Wischlippe 9 mit zwei gegenüberliegenden Wischkanten 11 auf. Mit der Wischkante 11 streicht die Wischlippe 9 über eine zu reinigende Scheibe und entfernt auf diese Weise zum Beispiel Wasser von der Scheibe. Da bei einem Scheibenwischer ein positives Wischergebnis in beide Bewegungsrichtungen des Wischgummis 1 erzielt werden muss, sind zwei Wischkanten 11 notwendig. Hierbei knickt der Lippenabschnitt 5 im Bereich des Gelenkabschnitts 7 jeweils ab, sodass das Wischgummi 1 die Scheibe jeweils mit einer der Wischkanten 11 überstreicht.

In der hier dargestellten Ausführungsform umschließen der Lippenabschnitt 5 und der Basisabschnitt 3 eine Gewebeeinlage 13. Die Gewebeeinlage 13 bildet auch den Gelenkabschnitt 7. Hierbei ist es sowohl möglich, wie in Figur 1 dargestellt, dass sich der Lippenabschnitt 5 und der Basisabschnitt 3 berühren, jedoch ist es auch möglich, dass ein Teil des Gewebeabschnitts zwischen dem Basisabschnitt 3 und dem Lippenabschnitt 5 nicht von Elastomermaterial bedeckt ist.

Der Basisabschnitt 3 und der Lippenabschnitt 5 können in einem oder in zwei getrennten Extrusionsprozessen hergestellt werden. Bevorzugt ist es jedoch, dass der Basisabschnitt 3 und der Lippenabschnitt 5 in einem Extrusionsprozess auf die Gewebeeinlage 13 aufextrudiert werden. Hierbei können der Basisabschnitt 3 und der Lippenabschnitt 5 aus dem gleichen Elastomermaterial oder aus unterschiedlichen Elastomermaterialien gefertigt werden.

So eignen sich zum Beispiel als Elastomermaterialien für den Basisabschnitt 3 Ethylen-Propylen-Terpolymer, Naturkautschuk, Chloropren-Kautschuk, Butadien-Kautschuk, Styrol-Butadien-Kautschuk, Acrylnitril-Butadien-Kautschuk, Polyurethan-Elastomere, NBR / PVC oder Verschnitte hiervon. Besonders bevorzugt wird Ethylen-Propylen-Dien-Terpolymer für den Basisabschnitt eingesetzt.

Als Material für den Lippenabschnitt 5 werden vorzugsweise Elastomermaterialien mit einem geringen Reibungskoeffizienten und einer hohen Verschleißfestigkeit verwendet. Um eine hinreichende Flexibilität des Lippenabschnitts zu erhalten, ist es ebenfalls bevorzugt, dass das Material mit dem geringen Reibungskoeffizienten und der hohen Verschleißfestigkeit ein Elastomermaterial ist. Geeignete Elastomermaterialien für den Lippenabschnitt 5 sind zum Beispiel Naturkautschuk, Chloropren-Kautschuk, Butadien-Kautschuk, Styrol-Butadien-Kautschuk, Ethylen-Propylen-Copolymere, Ethylen-Propylen-Dien-Terpolymere, Ethylen-Vinylacetat-Copolymere, chloriertes Polyethylen, chlorsulfoniertes Polyethylen, Acrylnitril-Butadien-Kautschuk, hydrierter Acrylnitril-Butadien-Kautschuk, Fluorkautschuk, Polyurethan-Elastomere, Mischungen aus Acrylnitril-Butadien-Kautschuk und Polyvinylchlorid, sowie Mischungen aus diesen Materialien. Besonders bevorzugt als Material für den Lippenabschnitt ist Naturkautschuk.

Zusätzlich ist es zur Verbesserung der Verschleißfestigkeit und zur Verringerung des Reibungswiderstandes auch möglich, auf dem Lippenabschnitt 5, insbesondere auf die Wischlippe 9 des Lippenabschnitts 5 eine Beschichtung aufzutragen. Geeignete Beschichtungen sind insbesondere solche, die beispielsweise Feststoffpartikel als reibungsverminderte Zusätze enthalten. Derartige Feststoffpartikel sind z.B. Partikel aus Polytetrafluorethylen oder Graphitpartikel. Geeignete Beschichtungen, die entsprechende reibungsverminderte Zusätze enthalten sind dem Fachmann bekannt.

Um den spezifischen Anforderungen an den Basisabschnitt 3 gerecht zu werden, beispielsweise der Alterungsbeständigkeit und der Festigkeit des Basisabschnitts, ist es weiterhin möglich, dass das den Basisabschnitt 3 bildende Elastomermaterial Füllstoffe, beispielsweise Kurzfasern enthält.

Als Gewebematerial für die Gewebeeinlage 13 eignet sich wie vorstehend bereits beschrieben jedes beliebige Material, aus dem sich Fasern fertigen lassen, die zu einem Gewebe verarbeitet werden können. Bevorzugt ist es jedoch, wenn die Gewebeeinlage 13 Aramidfasern enthält oder aus Aramidfasern besteht. Geeignete Aramidfasern sind zum Beispiel Kevlar ®.

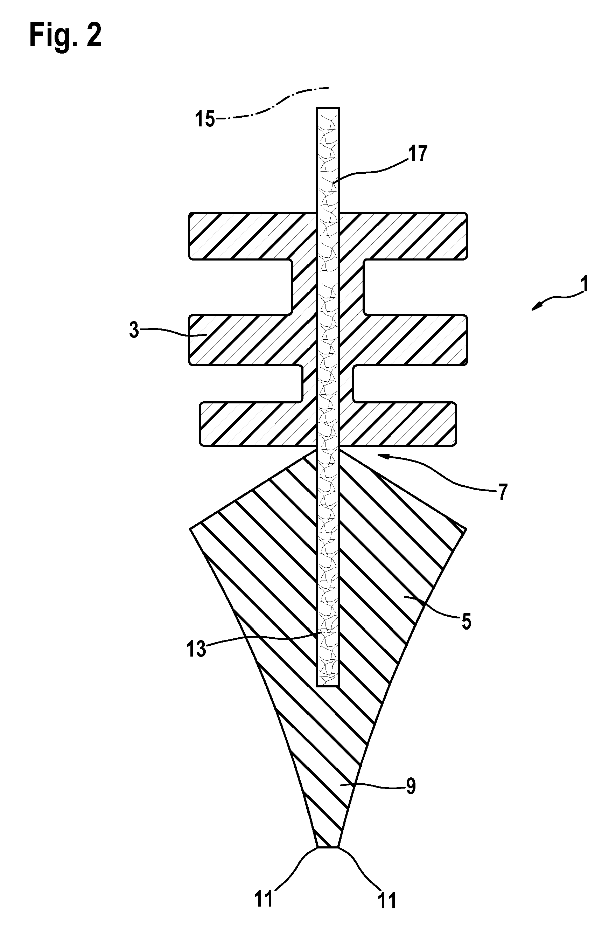

In Figur 2 ist ein Wischgummi mit einer Gewebeeinlage dargestellt, wobei ein Teil der Gewebeeinlage auf der dem Lippenabschnitt abgewandten Seite aus dem Basisabschnitt hervorsteht.

Im Unterschied zu der in Figur 1 dargestellten Ausführungsform ist bei der in Figur 2 dargestellten Ausführungsform die Gewebeeinlage 13 so ausgebildet, dass diese den Basisabschnitt 3 entlang einer Mittellinie 15 vollständig durchschneidet, wobei ein Teil der Gewebeeinlage 13 vom Lippenabschnitt 5 umschlossen wird und ein Teil 17 der Gewebeeinlage aus dem Basisabschnitt 3 auf der dem Lippenabschnitt 5 gegenüberliegenden Seite hervorsteht. Lippenabschnitt 5 und Basisabschnitt 3 sind in der hier dargestellten Ausführungsform so gestaltet, dass der Gelenkabschnitt 7 durch die Gewebeeinlage 13 gebildet wird. Alternativ ist es jedoch auch möglich, dass der Lippenabschnitt 5 und der Basisabschnitt 3 einteilig gefertigt sind und der Gelenkabschnitt 7 ebenfalls Elastomermaterial enthält. Hierbei ist es einerseits möglich, dass der Gelenkabschnitt 7 vollständig aus Elastomermaterial gefertigt ist, so dass die Gewebeeinlage 13 nur im Basisabschnitt 3 enthalten ist, oder aber dass der Gelenkabschnitt die Gewebeeinlage 13 umfasst, die beidseitig von Elastomermaterial umschlossen ist. Bevorzugt ist es jedoch, dass - wie in Figur 2 dargestellt - die Gewebeeinlage 13 alleine den Gelenkabschnitt 7 bildet.

Der hervorstehende Teil 17 der Gewebeeinlage 13 kann zum Beispiel genutzt werden, um das gefertigte Strangprofil daran aufzuhängen und gegebenenfalls durch nachfolgende Arbeitsschritte zu transportieren. Nachfolgende Arbeitsschritte können zum Beispiel die Vulkanisation des Elastomermaterials von Basisabschnitt 3 und Lippenabschnitt 5 sein oder auch gegebenenfalls die Beschichtung der Wischlippe 9 des Lippenabschnitts 5. Auch das Schneiden des das Wischgummi 1 bildenden Strangprofils ist ein solcher nachfolgender Arbeitsschritt.

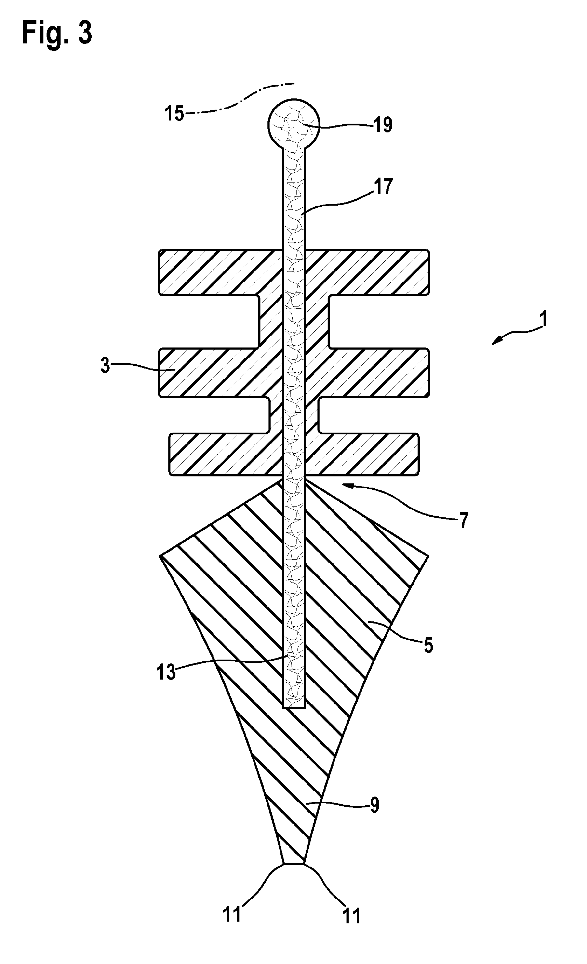

In Figur 3 ist eine weitere Ausführungsform eines erfindungsgemäß ausgebildeten Wischgummis dargestellt.

Das in Figur 3 dargestellte Wischgummi 1 unterscheidet sich von dem in Figur 2 dargestellten Wischgummi dadurch, dass der hervorstehende Teil 17 der Gewebeeinlage 13 eine Verdickung 19 aufweist. Zur Herstellung der Verdickung 19 kann jedes beliebige, dem Fachmann bekannte Verfahren, das sich eignet, eine solche Verdickung herzustellen, eingesetzt werden. Geeignete Verfahren sind beispielsweise geeignete Webtechniken, Prozesse zur Herstellung von Vliesen oder Prozesse zur Textilveredelung. So kann die Verdickung 19 zum Beispiel durch Aufwickeln der Gewebeeinlage erzeugt werden. Auch ist es möglich, zum Beispiel durch Tränken der Gewebeeinlage 13 mit einem beliebigen Harz die Verdickung 19 herzustellen. Weiterhin kann die Verdickung 19 zum Beispiel durch Umwickeln eines Drahtes oder durch geeignete Webtechniken hergestellt werden. Auch das Aufbringen weiterer Gewebeeinlagen oder Faserschichten, zum Beispiel durch Aufkleben oder durch Verbindung mit einem Harz ist möglich. Auch kann die Verdickung 19 zum Beispiel durch Verwendung dickerer Fäden zur Gewebeherstellung im Bereich der Verdickung 19 erzeugt werden.

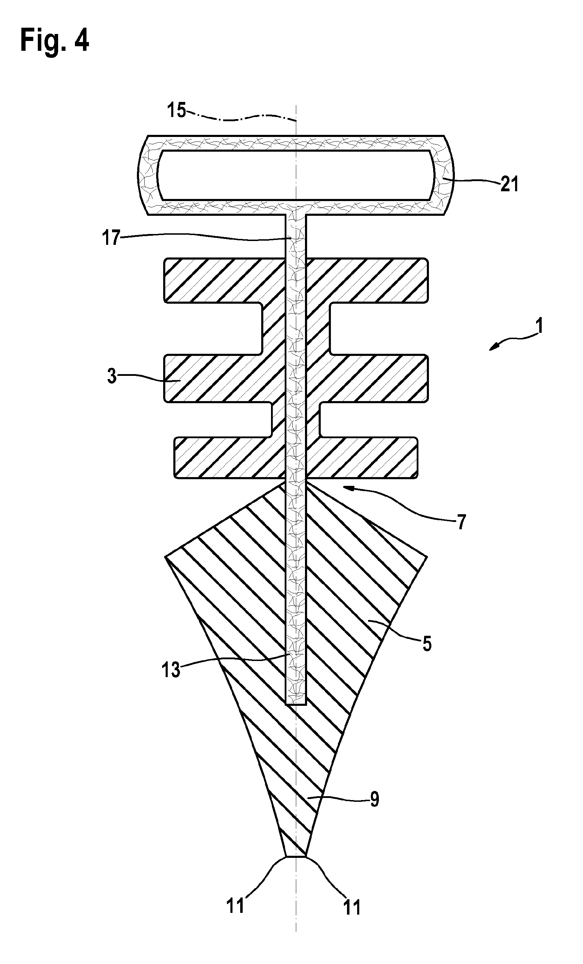

Ein erfindungsgemäß ausgebildetes Wischerblatt in einer vierten Ausführungsform ist in Figur 4 dargestellt.

Die in Figur 4 dargestellte Ausführungsform unterscheidet sich von in der Figur 3 dargestellten Ausführungsform dadurch, dass anstelle der Verdickung 19 eine Manschette 21 am Ende des hervorstehenden Teils 17 der Gewebeeinlage 13 ausgebildet ist. Die Manschette 21 kann zum Beispiel durch Ausbilden einer Öse aus dem Material der Gewebeeinlage 13 gefertigt werden. Um eine Manschette 21 mit einer stabilen Form zu erhalten, ist es zum Beispiel möglich, die Gewebeeinlage 13 mit einem beliebigen Harz, vorzugsweise einem duroplastischen Harz, beispielsweise einem Phenolharz oder einem Epoxidharz, zu tränken. Alternativ ist es jedoch auch möglich, zum Beispiel eine Öse in die Manschette 21 einzusetzen, um die Manschette 21 in Form zu halten.

Die Manschette 21 kann zum Beispiel genutzt werden, um ein Federelement, insbesondere eine Blattfeder, aufzunehmen. Mit einem solchen Federelement kann zum Beispiel die notwendige Vorspannung für ein Wischgummi, wie es als Scheibenwischer in einem Kraftfahrzeug eingesetzt wird, erzeugt werden.

Neben der hier dargestellten Ausführungsform ist es weiterhin auch möglich, dass der hervorstehende Teil 17 der Gewebeeinlage13 sowohl eine Verdickung 19 als auch eine Manschette 21 aufweist. Hierbei ist es sowohl möglich, dass die Verdickung 19 zwischen dem Basisabschnitt 3 und der Manschette 21 angeordnet ist, oder aber die Manschette 21 ist zwischen dem Basisabschnitt 3 und der Verdickung 19 angeordnet.

Weiterhin ist es neben den in den Figuren 3 und 4 dargestellten Ausführungsformen auch möglich, dass der Gelenkabschnitt 7 vollständig aus Elastomermaterial gefertigt ist oder aber, dass im Bereich des Gelenkabschnitts 7 die Gewebeeinlage 13 mit Elastomermaterial umschlossen ist. Dies ist auch bei einer hier nicht dargestellten Ausführungsform, die sowohl eine Verdickung 19 als auch eine Manschette 21 aufweist, möglich. Bevorzugt wird jedoch der Gelenkabschnitt 7, wie hier dargestellt, nur durch die Gewebeeinlage 13 ohne Umhüllung mit Elastomermaterial gebildet. Dies ist insbesondere dann vorteilhaft, wenn der Basisabschnitt 3 und der Lippenabschnitt 5 aus unterschiedlichen Materialien gefertigt werden.

## Patentansprüche

1. Wischerblatt für einen Scheibenwischer, insbesondere einen Scheibenwischer für ein Kraftfahrzeug, umfassend ein Wischgummi (1) aus einem Elastomermaterial mit einem Basisabschnitt (3) und einem Lippenabschnitt (5), wobei das Elastomermaterial eine Gewebeeinlage (13) zumindest teilweise umschließt, **dadurch gekennzeichnet, dass** der Basisabschnitt (3) und der Lippenabschnitt (5) durch die Gewebeeinlage (13) miteinander verbunden sind, wobei die Gewebeeinlage (13) als Gelenk (7) dient, und dass ein Teil (17) der Gewebeeinlage (13) aus dem Basisabschnitt (3) auf der dem Lippenabschnitt (5) abgewandten Seite hervorsteht.

2. Wischerblatt gemäß Anspruch 1, **dadurch gekennzeichnet, dass** der aus dem Basisabschnitt (3) hervorstehende Teil (17) der Gewebeeinlage (13) eine Verdickung (19) aufweist.

3. Wischerblatt gemäß Anspruch 2, **dadurch gekennzeichnet, dass** die Verdickung (19) am Ende des aus dem Basisabschnitt (3) hervorstehenden Teils (17) der Gewebeeinlage (13) ausgebildet ist.

4. Wischerblatt gemäß einem der Ansprüche 1 bis 3, **dadurch gekennzeichnet, dass** der aus dem Basisabschnitt (3) hervorstehende Teil (17) der Gewebeeinlage (13) eine Manschette (21) bildet, in der ein Federelement montierbar ist.

5. Wischerblatt gemäß einem der Ansprüche 1 bis 4, **dadurch gekennzeichnet, dass** die Gewebeeinlage (13) Aramidfasern enthält.

6. Wischerblatt gemäß einem der Ansprüche 1 bis 5, **dadurch gekennzeichnet, dass** der Lippenabschnitt (5) und der Basisabschnitt (3) des Wischgummis (1) aus unterschiedlichem Material gefertigt sind.

7. Verfahren zur Herstellung eines Wischerblatts gemäß einem der Ansprüche 1 bis 6, folgende Schritte umfassend:
(a) Führen eines Gewebestreifens durch ein Werkzeug eines Extruders zur Bildung einer Gewebeeinlage (13),
(b) Umschließen des Gewebestreifens mit einem Elastomermaterial zur Herstellung eines Strangprofils,
(c) Schneiden des Strangprofils in einzelne Wischgummis (1
(d) Hervorstehen lassen eines Teils der Gewebeeinlage (13) aus einem Basisabschnitt einer einem Lippenabschnitt des Wischgummis (1) abgewandten Seite.

8. Verfahren gemäß Anspruch 7, **dadurch gekennzeichnet, dass** das Strangprofil vor dem Schneiden in Schritt (c) vulkanisiert wird.

9. Verfahren gemäß Anspruch 7 oder 8, **dadurch gekennzeichnet, dass** das Elastomermaterial ausgewählt ist aus der Gruppe bestehend aus Naturkautschuk, Chloropren-Kautschuk, Ethylen-Propylen-Dien-Terpolymere und Mischungen aus zwei oder mehreren davon.

## Claims

1. Wiper blade for a window wiper, in particular a window wiper for a motor vehicle, comprising a wiping rubber (1) of an elastomer material with a base portion (3) and a lip portion (5), wherein the elastomer material at least partially encloses a fabric insert (13), **characterized in that** the base portion (3) and the lip portion (5) are connected to each other by the fabric insert (13), wherein the fabric insert (13) serves as a joint (7), and **in that** part (17) of the fabric insert (13) protrudes from the base portion (3) on the side facing away from the lip portion (5).

2. Wiper blade according to Claim 1, **characterized in that** the part (17) of the fabric insert (13) that is protruding from the base portion (3) has a thickening (19).

3. Wiper blade according to Claim 2, **characterized in that** the thickening (19) is formed at the end of the part (17) of the fabric insert (13) that is protruding from the base portion (3).

4. Wiper blade according to one of Claims 1 to 3, **characterized in that** the part (17) of the fabric insert (13) that is protruding from the base portion (13) forms a sleeve (21) in which a spring element can be fitted.

5. Wiper blade according to one of Claims 1 to 4, **characterized in that** the fabric insert (13) contains aramid fibres.

6. Wiper blade according to one of Claims 1 to 5, **characterized in that** the lip portion (5) and the base portion (3) of the wiping rubber (1) are produced from different material.

7. Method for producing a wiper blade according to one of Claims 1 to 6, comprising the following steps:
(a) guiding a fabric strip through a die of an extruder to form a fabric insert (13),
(b) enclosing the fabric strip in an elastomer material to produce an extruded profile,
(c) cutting the extruded profile into individual wiping rubbers (1),
(d) allowing part of the fabric insert (13) to protrude from a base portion of a side facing away from a lip portion of the wiping rubber (1).

8. Method according to Claim 7, **characterized in that** the extruded profile is vulcanized before the cutting in step (c).

9. Method according to Claim 7 or 8, **characterized in that** the elastomer material is selected from the group comprising natural rubber, chloroprene rubber, ethylenepropylene-diene terpolymers and mixtures of two or more thereof.

## Revendications

1. Balai pour un essuie-glace, en particulier un essuie-glace pour un véhicule automobile, comprenant une lame en caoutchouc (1) en un matériau élastomère comportant une partie de base (3) et une partie de lèvre (5), dans lequel le matériau élastomère enveloppe au moins en partie un insert en tissu (13), **caractérisé en ce que** la partie de base (3) et la partie de lèvre (5) sont assemblées l'une à l'autre au moyen de l'insert en tissu (13), dans lequel l'insert en tissu (13) fait office d'articulation (7), et **en ce qu'**une partie (17) de l'insert en tissu (13) sort de la partie de base (3) sur le côté situé à l'opposé de la partie de lèvre (5).

2. Balai d'essuie-glace selon la revendication 1, **caractérisé en ce que** la partie (17) de l'insert en tissu (13) sortant de la partie de base (3) présente une surépaisseur (19).

3. Balai d'essuie-glace selon la revendication 2, **caractérisé en ce que** la surépaisseur (19) est formée à l'extrémité de la partie (17) de l'insert en tissu (13) sortant de la partie de base (3).

4. Balai d'essuie-glace selon l'une quelconque des revendications 1 à 3, **caractérisé en ce que** la partie (17) de l'insert en tissu (13) sortant de la partie de base (3) forme une manchette (21), dans laquelle un élément de ressort peut être monté.

5. Balai d'essuie-glace selon l'une quelconque des revendications 1 à 4, **caractérisé en ce que** l'insert en tissu (13) contient des fibres d'aramide.

6. Balai d'essuie-glace selon l'une quelconque des revendications 1 à 5, **caractérisé en ce que** la partie de lèvre (5) et la partie de base (3) de la lame en caoutchouc (1) sont fabriquées en un matériau différent.

7. Procédé de fabrication d'un balai d'essuie-glace selon l'une quelconque des revendications 1 à 6, comprenant les étapes suivantes:
(a) guider un ruban de tissu à travers un outil d'une extrudeuse pour la formation d'un insert en tissu (13),
(b) envelopper le ruban de tissu avec un matériau élastomère pour la fabrication d'un profilé extrudé,
(c) couper le profilé extrudé en lames en caoutchouc individuelles (1),
(d) faire sortir une partie de l'insert en tissu (13) hors d'une partie de base d'un côté situé à l'opposé d'une partie de lèvre de la lame en caoutchouc (1).

8. Procédé selon la revendication 7, **caractérisé en ce que** l'on vulcanise le profilé extrudé avant la coupe à l'étape (c).

9. Procédé selon la revendication 7 ou 8, **caractérisé en ce que** le matériau élastomère est choisi dans le groupe composé du caoutchouc naturel, du caoutchouc chloroprène, de terpolymères éthylène-propylène-diène et de mélanges de deux ou de plusieurs de ceux-ci.
